# FASCICULE DE BREVET EUROPEEN

(11) **EP 2 569 149 B1**
(45) Date de publication et mention de la délivrance du brevet: **25.03.2015**
(21) Numéro de dépôt: 11725135.5
(22) Date de dépôt: 06.05.2011
(51) Int. Cl.: B29D 30/52, B29C 47/02, B60C 11/18

(54) **PROCEDE ET MACHINE POUR LA REALISATION D'UNE BANDE DE ROULEMENT POUR PNEUMATIQUES DE VEHICULE**
VERFAHREN UND VORRICHTUNG ZUR HERSTELLUNG EINER LAUFFLÄCHE FÜR FAHRZEUGREIFEN
METHOD AND APPARATUS FOR PRODUCING A TREAD FOR VEHICLE TIRES

(30) Priorité: 11.05.2010 FR 1053662
(43) Date de publication de la demande: 20.03.2013
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BESSAC, Christophe, 63040 Clermont-Ferrand - Cedex 9 (FR)
(74) Mandataire: Noel, Luminita
(86) Numéro de dépôt international: PCT/FR2011/051035
(87) Numéro de publication internationale: WO 2011/141669

(56) Documents cités:
- EP-A2- 0 881 060
- GB-A- 506 142
- US-A- 1 948 311
- US-A- 2 960 138
- US-B1- 6 951 233

## Description

L'invention concerne la fabrication des pneumatiques de véhicule et en particulier de la bande de roulement du pneumatique.

Certains pneumatiques particuliers comprennent une bande de roulement formée d'un corps principal en gomme et de joncs ou cordons noyés dans la gomme. Les joncs sont réalisés dans un matériau ayant des propriétés mécaniques différentes de celles du matériau du corps. Ces propriétés permettent aux joncs, le moment venu, de compenser l'usure de la bande de roulement du pneumatique et de préserver les propriétés mécaniques de ce dernier.

La fabrication de la bande de roulement d'un pneumatique formée d'un corps principal en gomme et de joncs noyés dans la gomme est bien connue dans l'art antérieur: voir par exemple les documents US 2960138 - A, US 1948311 - A, GB 506142 - A, US 6951233 - B ou EP 881060 - A, chaque document illustrant des procédés différents de fabrication.

Selon une première technique connue en soi, on réalise ces bandes de roulement particulières avec leurs joncs par coextrusion. On extrude donc conjointement les joncs et la bande de roulement dans laquelle ils sont noyés.

Cette technique conduit toutefois à de fréquents défauts de fabrication qui forment des rebuts de produits complexes dont la matière n'est pas facilement valorisable.

Un des buts de l'invention est de proposer une méthode et un procédé de fabrication alternatifs susceptibles d'améliorer la fabrication des bandes de roulement contenant un jonc noyé dans la gomme du corps principal.

A cet effet, on prévoit selon l'invention un procédé de réalisation d'une bande de roulement pour un pneumatique de véhicule comme défini dans la revendication 1, dans lequel procédé:
- on extrude une bande de gomme ;
- on forme au moins un sillon dans la bande, la bande présentant de la matière contiguë au sillon ;
- on fournit au moins un jonc à partir d'une bobine ;
- on insère le jonc dans le ou chaque sillon ; et
- on referme le sillon sur le jonc avec la matière de la bande contiguë au sillon.

Des formes préférentielles de la mise en oeuvre du procédé selon l'invention forment l'objet des revendications dépendantes 2 à 8.

Les joncs sont réalisés en préalable à la formation de la bande de gomme et séparément de cette dernière. Il suffit alors de les disposer dans le sillon et de refermer ce dernier. On enfouit donc les joncs dans la gomme suite à sa mise en forme. Ce procédé limite la quantité de rebuts pour défaut de fabrication en raison du fait qu'il permet de s'affranchir des étapes de stabilisation du procédé au lancement de chaque série de fabrication. De plus, bien que les joncs soient fabriqués préalablement et séparément, ils se retrouvent convenablement noyés dans la gomme.

De préférence, pour chaque section de la bande, on extrude la section et on forme le sillon dans la section simultanément.

Dans un mode de réalisation, on forme le sillon ou au moins l'un des sillons de sorte qu'une profondeur du sillon varie le long du sillon.

Par exemple, on forme le sillon de sorte que la profondeur du sillon varie le long du sillon de façon sinusoïdale.

Avantageusement, on forme le sillon ou au moins l'un des sillons de sorte que le jonc, après l'insertion dans le sillon, affleure à la surface de la bande.

Dans un mode de réalisation, on forme sur la bande au moins un relief contigu au sillon et de préférence, pour le ou chaque sillon, deux reliefs entre lesquels s'étend le sillon.

Avantageusement, on referme le sillon sur le jonc avec la matière formant le ou chaque relief.

Dans un autre mode de réalisation compatible avec le précédent, on referme le sillon sur le jonc avec de la matière de la bande ne formant pas un relief sur la bande.

En effet, la gomme crue est suffisamment molle pour permettre de refermer le sillon sans nécessairement prévoir à cette fin une réserve de matière sous la forme d'un ou plusieurs reliefs.

On prévoit également selon l'invention une machine de réalisation d'une bande de roulement pour un pneumatique de véhicule comme définie dans la revendication 9, ladite machine comprenant:
- des moyens pour extruder une bande de gomme;
- des moyens pour former au moins un sillon dans la bande de sorte que la bande présente de la matière contiguë au sillon ;
- des moyens de réception d'une bobine de jonc ;
- des moyens pour insérer dans le ou chaque sillon un jonc provenant de la bobine ; et
- des moyens pour refermer le sillon au-dessus du jonc avec de la matière de la bande contiguë au sillon.

Des modes préférentiels de realisation de la machine selon l'invention forment l'objet des revendications dépendantes 10 à 17.

De préférence, les moyens de formation du sillon sont montés réglables de façon à modifier une profondeur du sillon.

Ainsi, on peut adapter la profondeur des sillons selon le modèle du pneumatique que la bande de roulement servira à former. On peut aussi améliorer la précision dimensionnelle du sillon, voire de chaque sillon indépendamment les uns des autres. On peut enfin compenser par ce réglage le fait que la profondeur de sillon serait sinon insuffisante ou excessive en raison d'autres paramètres.

Avantageusement, la machine comprend au moins un actionneur apte à déplacer les moyens de formation du sillon durant la formation du sillon ou de l'un au moins des sillons.

De préférence, la machine comprend un organe formant un orifice d'extrusion et apte à creuser le ou chaque sillon.

Avantageusement, l'organe est d'une seule pièce.

On peut prévoir que les moyens pour former les sillons sont disposés en partie dans l'orifice d'extrusion.

De préférence, les moyens d'insertion comprennent au moins une roue.

Dans un mode de réalisation, la machine comprend des moyens pour disposer dans le sillon de la matière formant au moins un relief sur la bande contigu au sillon.

Dans un autre mode de réalisation compatible avec le précédent, la machine comprend des moyens pour disposer dans le sillon de la matière de la bande ne formant pas un relief sur la bande.

On prévoit aussi une bande de roulement pour pneumatique qui résulte de la mise en oeuvre du procédé selon l'invention, et une ébauche crue de pneumatique qui comprend une telle bande.

D'autres caractéristiques et avantages de l'invention apparaîtront encore dans la description suivante de deux modes de réalisation et de variantes donnés à titre d'exemples non limitatifs en référence aux dessins annexés sur lesquels :
- les figures 1 et 2 sont deux vues respectivement en perspective et en coupe verticale transversale d'un nez d'une machine selon un premier mode de réalisation de l'invention ;
- les figures 3 à 4 sont deux vues respectivement en perspective et de face de la lame de la machine de la figure 1;
- la figure 5 est une vue en section de la bande de roulement obtenue par le passage sous la lame de la figure 3;
- la figure 6 est une vue analogue à la figure 1 montrant l'implantation de la lame de la figure 3 sur la machine ;
- les figures 7 et 8 sont deux vues analogues à la figure 5 montrant sur deux bandes de pneumatiques différents les joncs introduits dans les sillons ;
- la figure 9 est une vue analogue à la figure 6 montrant les organes de guidage des joncs dans les sillons sur la machine ;
- la figure 10 est une vue en élévation de la partie de la machine illustrée à la figure 9 ;
- les figures 11 et 12 sont des vues analogues aux figures 7 et 8 montrant la section de la bande lorsque les sillons sont refermés ;
- la figure 13 est une vue analogue à la figure 9 montrant les organes de comblement de la machine de la figure 1 ;
- la figure 14 est une vue en perspective de l'un de ces organes ;
- la figure 15 est une vue en coupe transversale de la bande du pneumatique fabriquée au moyen de la machine;
- les figures 16 à 19 sont des vues analogues respectivement aux figures 3, 4, 6 et 2 montrant un deuxième mode de réalisation de la machine selon l'invention ;
- la figure 20 illustre une variante de réalisation de la machine de la figure 6 ;
- la figure 21 est une vue en coupe longitudinale d'une variante d'une bande de roulement obtenue par la machine de la figure 20 ; et
- la figure 22 illustre une variante de la bande de roulement de la figure 5 obtenue par une variante de mise en oeuvre du procédé de l'invention.

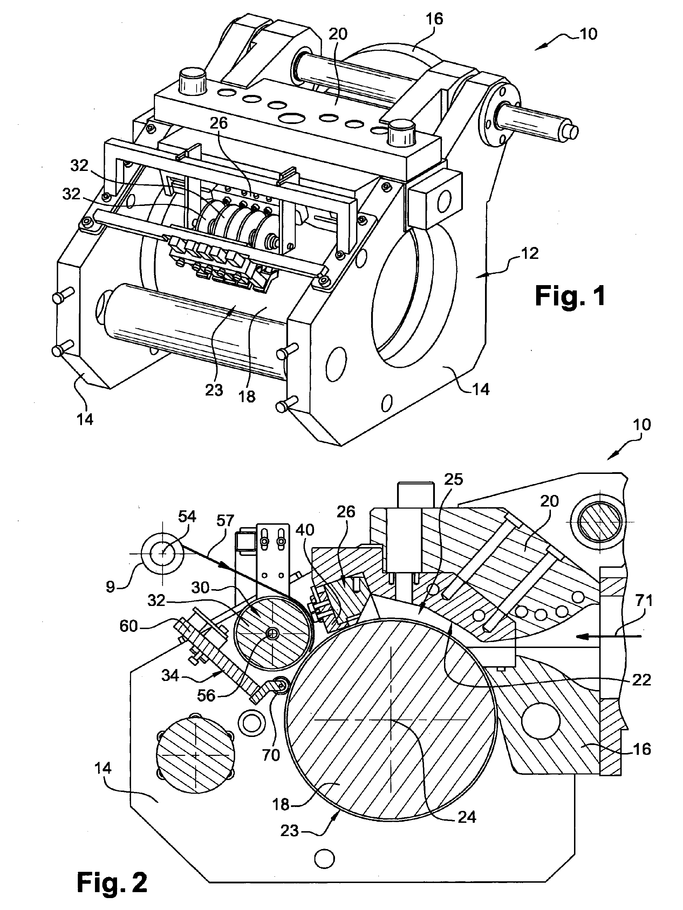

Nous allons décrire, en référence aux figures 1 à 14, un premier mode de réalisation d'une machine selon l'invention qui est, en l'espèce, une machine d'extrusion servant à la réalisation d'une bande de roulement pour la fabrication d'une ébauche crue de pneumatique de véhicule.

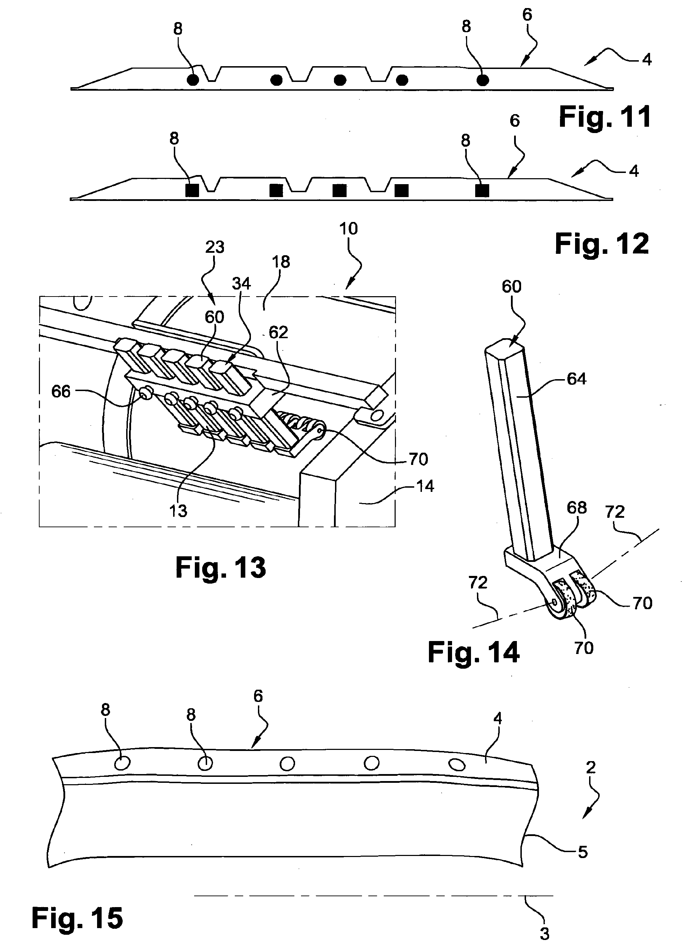

On a illustré à la figure 15 une portion d'une coupe d'un pneumatique résultant de cette fabrication après vulcanisation de l'ébauche, la coupe étant prise dans un plan radial par référence à un axe 3 du pneumatique. La bande de roulement 4 s'étend en périphérie du pneumatique entre les flancs de ce dernier et sur sa carcasse 5, en périphérie de cette dernière. La bande 4 présente une face périphérique externe 6 formant la surface par laquelle le pneumatique sera en contact avec le sol. Cette face a une forme générale cylindrique à section circulaire.

La bande 4 comprend un corps principal formé de gomme, laquelle comprend de façon classique un mélange d'élastomères naturel et synthétique ainsi que différents produits et adjuvants.

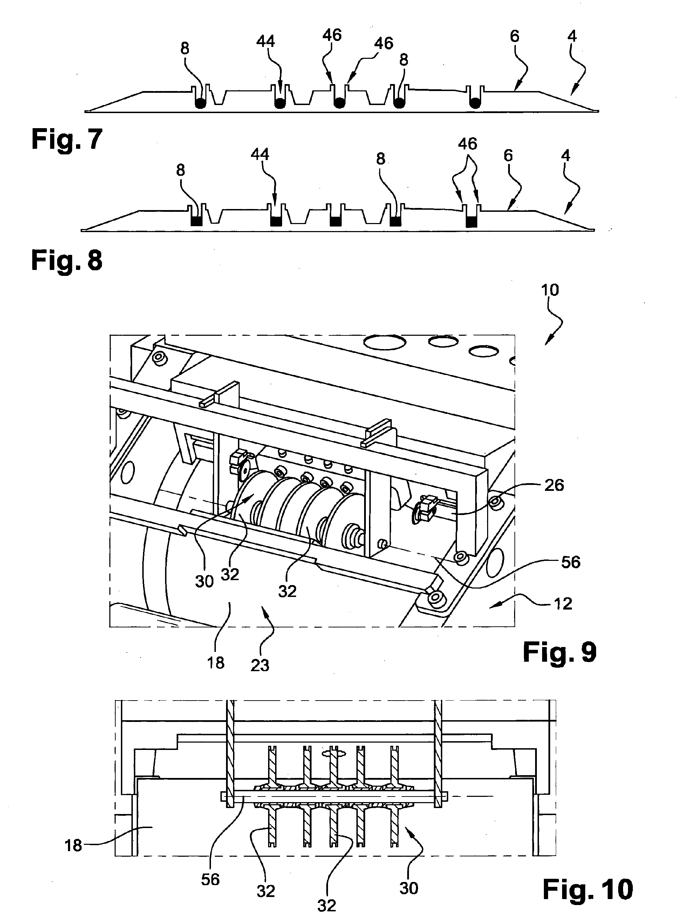

La bande 4 comprend en outre plusieurs joncs ou cordons 8 qui sont en l'espèce au nombre de cinq, ce nombre n'étant pas limitatif. Les joncs ont chacun une forme filaire, à section transversale circulaire comme c'est le cas aux figures 7, 11 et 15 ou carrée comme dans le cas des figures 8 et 12. Les joncs sont noyés dans le corps et s'étendent à distance des deux faces principales externe et interne de la bande. Chaque jonc forme un cercle coaxial au pneumatique et s'étend dans un plan perpendiculaire à l'axe 3. Les joncs peuvent avoir des profils transversaux identiques ou différents et peuvent être constitués de matériaux identiques ou différents. Les joncs ne sont pas fabriqués en eux-mêmes au moyen de la machine et selon le procédé qui va être décrit. Ils sont réalisés individuellement, préalablement et séparément du corps 5, puis enroulés sur des bobines 9 qui sont ensuite amenées sur la machine.

Le nez 10 de la machine d'extrusion comporte un bâti 12 comprenant deux montants verticaux 14 de forme plane disposés parallèlement l'un à l'autre et en regard et à distance l'un de l'autre. La plupart des organes du nez s'étendent dans l'espace aménagé entre les deux montants 14.

Le nez comprend un conduit 16, illustré notamment en partie droite de la figure 2 et servant pour l'amenée de la gomme destinée à être extrudée pour former le corps. Le nez 10 comprend un cylindre ou rouleau 18 disposé à l'embouchure aval du circuit 16 et présentant une face périphérique cylindrique 23 à section circulaire. Le nez comprend en outre un ensemble de pièces 20 formant une voûte 22 qui délimite avec la face 23 une chambre 25 de mise en pression du matériau à extruder, sur laquelle débouche le conduit 16. Les pièces 20 sont rigidement fixées au bâti 12, tandis que le rouleau 18 est monté mobile à rotation par rapport aux montants 14 autour de son axe horizontal 24 dans le sens antihoraire sur la figure 2. Le nez 10 comprend une lame profilée 26 s'étendant en aval de la chambre 25 et en regard de la face 23 du rouleau. En aval de la lame, le nez comprend un ensemble 30 à roulettes de pose 32 servant à introduire les joncs dans les sillons réalisés préalablement, ainsi qu'un ensemble de rouletage 34 servant à refermer les sillons sur les joncs ainsi disposés.

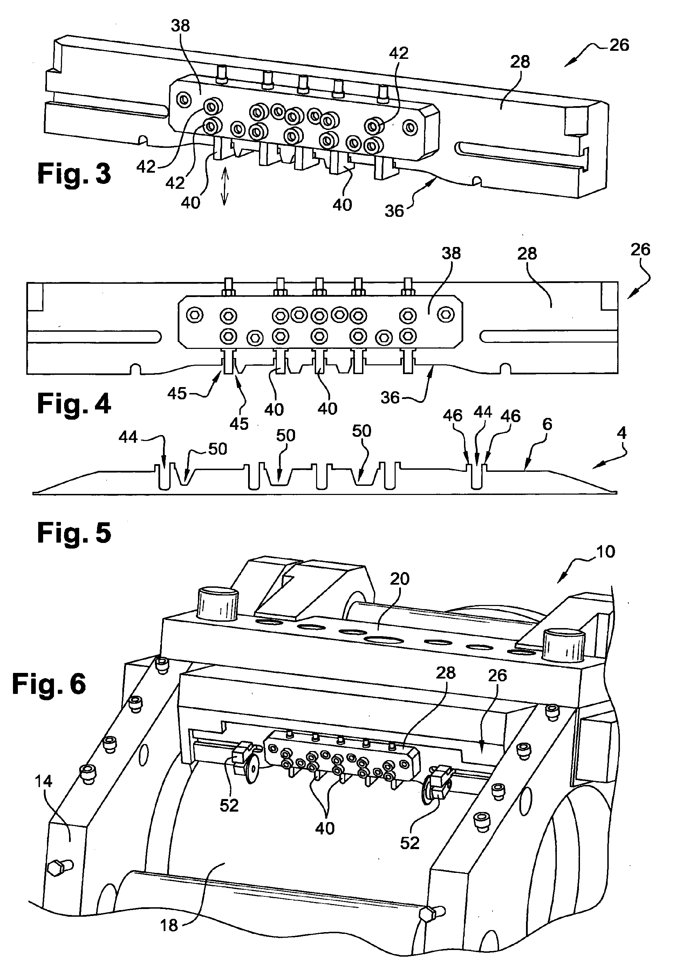

En références aux figures 3 et 4, la lame profilée 26 comprend un corps principal 28 de forme allongée de l'un à l'autre des montants 14 et rigidement fixé à ceux-ci. Le corps 28 a une face inférieure 36 présentant des cavités et des reliefs et destinée à donner sa forme à la face supérieure 6 de la bande de roulement par l'effet du passage de la gomme entre cette face 36 et la face 23 du rouleau. Ces deux éléments forment ainsi un orifice d'extrusion qui confère sa forme à la section de la bande 4 lors du passage du matériau.

La lame 26 comprend de plus un support 38 portant des socs de charrue 40 dont le nombre égale celui des joncs 8 que la bande est destinée à recevoir, cinq en l'espèce. Comme illustré notamment à la figure 2, chacun des socs 40 présente une forme générale en « L », la partie la plus longue du « L » s'étendant dans une direction proche de la direction verticale et proche de la direction radiale à l'axe 24, et étant enfilée dans un orifice dédié du support 38 dans lequel elle est montée mobile à coulissement suivant cette direction.

La lame 26 comprend pour chaque soc 40 des moyens de fixation rigides au corps 28, formés en l'espèce pour chaque soc par deux vis de fixation 42 traversant une partie du support et serrant le soc contre une face interne du support. Cet agencement permet de régler la position du soc par rapport au corps 28 suivant la direction précitée et donc de régler la profondeur du sillon 44 réalisé par le soc correspondant dans la bande 4, par exemple suivant le modèle de pneumatique en cours de fabrication.

Les sillons 44 en eux-mêmes sont générés par la pénétration de la base ou petit côté du « L » de chaque soc 40 dans le matériau extrudé formant la bande de gomme. Les sillons sont générés par le fait que la base de chaque soc s'étend en saillie de la face 36 du corps 28, ou plus précisément de certaines zones de cette face, comme illustré à la figure 4. Le petit coté du « L » est orienté de sorte que le soc pénètre sous la partie profilée de la lame d'extrusion. Ainsi, les moyens 40 pour former les sillons sont disposés en partie dans l'orifice d'extrusion. Ce montage particulier permet de disposer la partie amont du soc dans une zone où la pression au sein de la bande n'est pas encore nulle, ce qui permet de faciliter la pénétration du soc dans le matériau de la bande ainsi que la qualité du moulage.

La face 36 présente au droit de chaque soc une cavité 45 débordant au-delà du soc de chaque côté de ce dernier. Chacune de ces cavités permet de former de part et d'autre du sillon des bourrelets 46 respectifs en relief formant des surplus de gomme s'étendant en saillie de la partie principale de la face 6. Chaque sillon s'étend donc entre les deux bourrelets 46 associés qui lui sont contigus.

Le nombre de sillons étant en l'espèce égal à cinq, on compte dix bourrelets. Les sillons 44 sont destinés à recevoir les joncs, puis à être comblés comme on le verra plus loin. La bande 36 est également conformée pour former des sillons 50 en l'espèce au nombre de trois et destinés à persister de façon visible sur la bande de roulement et sur le pneumatique final, au contraire des sillons 44. Tous les sillons précités s'étendent parallèlement les uns aux autres et à la direction longitudinale de la bande 4.

Comme illustré à la figure 6, la lame 26 porte, en outre, en l'espèce, deux organes 52 formant des couteaux d'ébarbage du matériau pour délimiter les deux bords latéraux opposés de la bande. Ces organes sont disposés en regard l'un de l'autre, de part et d'autre du support 38.

La machine d'extrusion comprend des moyens 54 pour la réception de bobines 9 sur lesquelles sont enroulés les joncs respectifs. Ces moyens sont agencés de façon à permettre aux bobines de se dévider au fur et à mesure de la fabrication.

L'ensemble 30 comprend des roues 32 qui sont en nombre égal, en l'espèce, à celui des joncs, à savoir au nombre de cinq. Les roues sont identiques entre elles et montées coaxialement les unes aux autres autour d'un axe horizontal 56. Elles s'étendent en regard de la lame 26 de sorte qu'un trajet 57 des joncs venant des bobines 9 passe entre l'ensemble 30 et la lame 26 avant leur insertion dans la bande de roulement. Au cours de ce trajet, les joncs viennent en appui contre le bord périphérique circonférentiel des roues 32 respectives. Chaque roue sert ainsi à guider le jonc correspondant jusqu'au fond du sillon pour l'y déposer, la roue pénétrant à cette fin à l'intérieur du sillon correspondant.

Les roues 32 sont montées sur un portique commun fixé au bâti et dont la position verticale est réglable afin de faire pénétrer les roues plus ou moins profondément dans les sillons, et donc d'insérer les joncs correspondants plus ou moins dans ces derniers. On ne prévoit pas en l'espèce de motorisation pour les roues 32, ces dernières étant entraînées en rotation par le défilement de la bande de roulement et les joncs insérés dans cette bande à la même vitesse périphérique que cette dernière. On peut prévoir une pièce de guidage intermédiaire telle qu'un tube traversé suivant son axe par les joncs pour leur guidage depuis les bobines 9 jusqu'à l'ensemble 30.

La figure 7 illustre la bande 4 avec ses sillons 44 ouverts au fond desquels les joncs 8 ont été déposés. Il s'agit sur cette figure de joncs à section transversale circulaire d'un diamètre d'environ 4 millimètres. La figure 8 illustre de façon analogue le cas d'une bande 4 dans les sillons 44 de laquelle sont disposés des joncs 8 en gomme et présentant une section transversale de forme parallélépipédique, par exemple carrée à 4 millimètres de côté.

En référence aux figures 2 et 11 à 14, l'ensemble de rouletage 34 comprend des organes de rouletage dont le nombre égale celui des joncs, à savoir cinq en l'espèce. L'un de ces organes 60 a été illustré à la figure 14. L'ensemble 24 comprend un support 62 rigidement fixé aux montants 14 et s'étendant de l'un à l'autre de ceux-ci. Chacun des organes 60 comprend un mât 64 de forme profilée, reçu dans un orifice femelle correspondant du support 62 en étant mobile à coulissement dans ce dernier suivant sa direction longitudinale qui est proche de la direction radiale à l'axe 24. L'ensemble 34 comprend pour chaque organe un élément de serrage 66 traversant la paroi du support 62 pour serrer le mât 64 contre une face interne du support et ainsi immobiliser l'organe 60 rigidement par rapport au support 62 dans la position de réglage choisie.

Chaque organe 60 comprend à une extrémité inférieure du mât un bras 68 portant deux roulettes dentées 70 montées rotatives sur le bras via des axes de rotation respectifs 72 coplanaires mais sécants et agencés de sorte que les roulettes ont une configuration ouverte vers l'amont par référence au sens de défilement de la bande. Les roulettes sont disposées de façon à venir en appui sur les bourrelets respectifs 46 associés au sillon considéré de façon à rabattre la matière formant ces reliefs dans le sillon par dessus le jonc 8 en vue de combler le sillon 44. Le jonc se trouve donc enfoui, recouvert et noyé dans la bande de roulement comme illustré aux figures 11 et 12 dans les deux cas correspondant aux figures 7 et 8 respectives.

Le procédé de l'invention est mis en oeuvre de la façon suivante au moyen de cette machine. Le matériau formant la gomme est amené dans le nez par le circuit 16 suivant la flèche 71, puis passe dans la chambre 25 où il est mis en pression avant d'être extrudé à travers l'orifice d'extrusion formé par la lame 26 et le rouleau 18. Au cours de cette opération qui met notamment en forme la face supérieure 6 de la bande, les socs 40 réalisent les sillons longitudinaux 44 dans la face 6, ainsi que les deux bourrelets 46 situés de part et d'autre de chaque sillon. Les socs se trouvent en partie arrière dans une zone de la machine où la pression est réduite par rapport à la pression régnant dans la chambre 25.

Les bobines 9 portant les joncs se dévident et les joncs guidés et soutenus par les roulettes 32 passent entre celles-ci et la lame 26 pour être insérées au fond des sillons respectifs 44 dans l'épaisseur de la bande de roulement. Les joncs se déroulent des bobines sous l'effet de l'entraînement de la bande qui entraîne également les roues 32. La bobine n'est freinée par aucun actionneur au cours de son mouvement.

La matière formant la bande est à ce stade encore chaude et molle. Lorsque la bande passe sous l'ensemble de rouletage 34, les roues 70 rabattent la matière des bourrelets 46 dans le sillon correspondant, noyant ainsi le jonc associé dans l'épaisseur de la bande de roulement. Le sillon se trouve ainsi bouché et comblé.

Ces opérations ont lieu successivement pour chaque section de bande considérée. Elles ont lieu en même temps pour l'ensemble de la bande, les bandes étant fabriquées en continu.

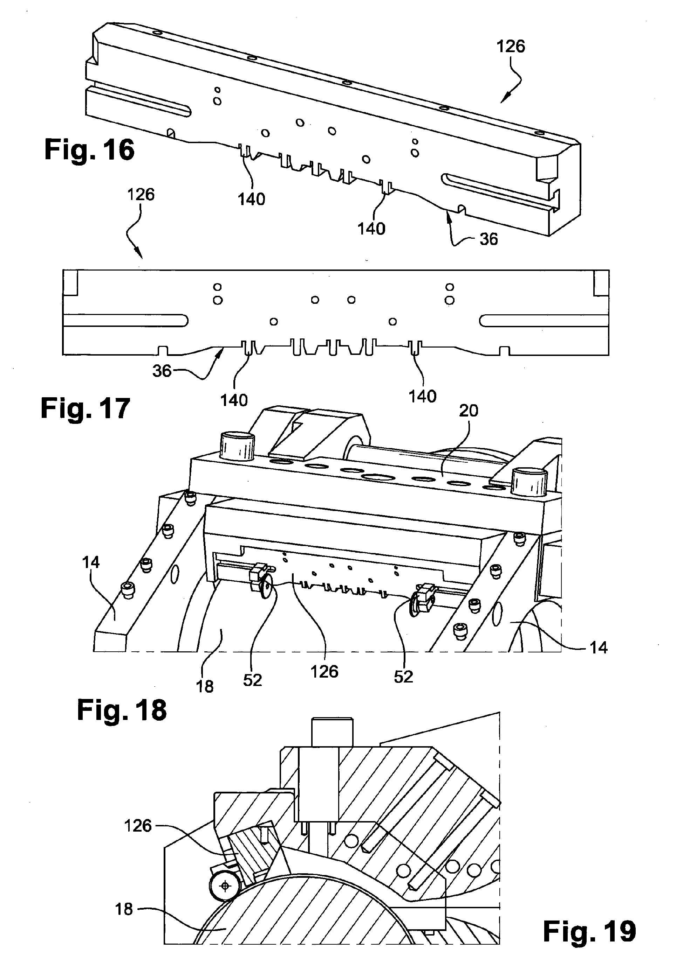

Un deuxième mode de réalisation de la machine d'extrusion est illustré aux figures 16 à 19. Il diffère du précédent mode seulement par la constitution de la lame et des socs. En l'espèce, les socs 140 sont rigidement fixés à la lame 126. En outre, l'ensemble de la lame 126 est cette fois d'une seule pièce. Ce sont donc les découpes de sa face inférieure 36 qui tout à la fois confèrent sa forme générale à la face 6 de la bande et forment les sillons 44 et 50 ainsi que les paires de bourrelets 46. On ne dispose donc pas de la faculté de régler la position de chaque soc par rapport au reste de la lame. Pour réaliser un autre modèle de bande de roulement, il faut remplacer la lame 126 par une autre présentant des caractéristiques dimensionnelles différentes. En revanche, le nombre de parties distinctes et mobiles les unes par rapport aux autres est réduit au minimum par rapport au premier mode de réalisation, ce qui évite l'accumulation de matière parasite entre les pièces, susceptible de nuire à leur bon positionnement et à la qualité de la fabrication. Le profil donné à la bande est identique à celui obtenu avec le premier mode et la fabrication est identique sous ses autres aspects.

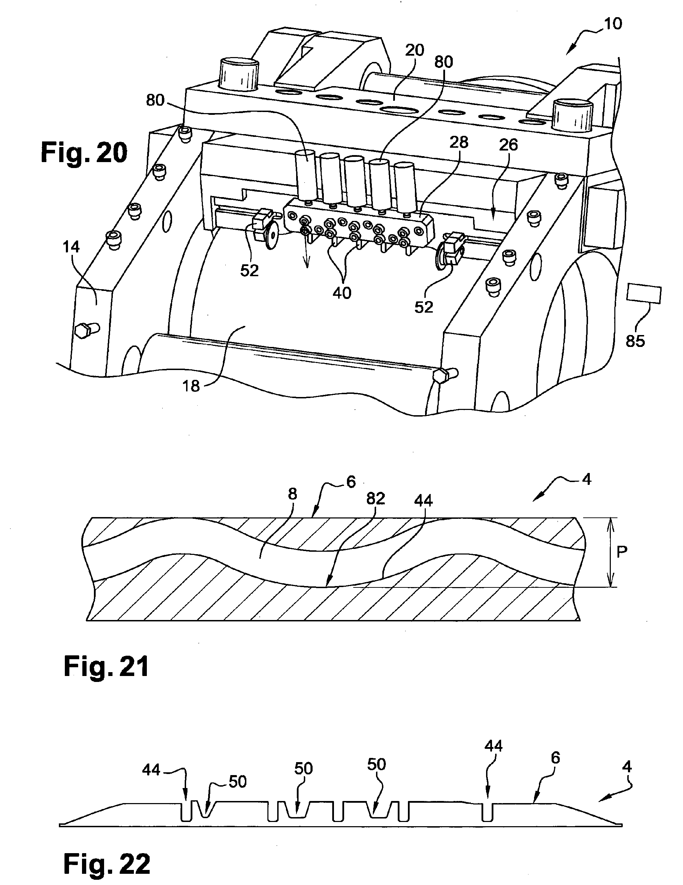

La variante de la machine illustrée à la figure 20 ne diffère de celle de la figure 6 que par les caractéristiques suivantes.

Chacun des socs de charrue 40 étant monté coulissant par rapport au corps 28 suivant la direction verticale, le corps porte des actionneurs 80, tels que des vérins, reliés aux socs de façon bijective et aptes chacun à déplacer le soc correspondant suivant cette direction par rapport au corps et ce pendant la réalisation du sillon et le défilement de la bande. De la sorte, chaque soc réalise un sillon dont la profondeur p par rapport à la face 6 de la bande n'est pas uniforme et varie le long du sillon et de la bande. Dans l'exemple de bande de roulement achevée illustré à la figure 21 et dans lequel le sillon 44 a donc été refermé sur le jonc 8, la variation est telle que cette profondeur p évolue le long du sillon suivant une loi sinusoïdale, le fond 82 du sillon ayant une forme sinusoïdale en coupe suivant le plan longitudinal médian du sillon. Lorsque le jonc 8 est installé dans le sillon comme sur la figure 21, puisque le jonc présente une section, ici circulaire, de dimension constante le long du jonc et qu'il repose au fond du sillon, sa profondeur par rapport à la face 6 de la bande varie elle aussi et le jonc adopte ici lui aussi une forme sinusoïdale en vue de côté.

On pourra donner au fond et au jonc une profondeur et une forme variables suivant une évolution autre que sinusoïdale.

Dans le présent exemple, les dimensions du sillon et du jonc sont telles que le jonc affleure à la surface de la face 6 de la bande. Le jonc demeure néanmoins sous cette face ou au niveau de cette dernière sur toute sa longueur.

Comme dans les précédents modes de réalisation, la commande de la machine pour la mise en oeuvre du procédé de l'invention est assurée par des moyens de commande 85 formant un ou plusieurs ordinateurs à microprocesseur et mémoire. Ces moyens comprennent un ou plusieurs programmes sous forme enregistrée comprenant des instructions codées et aptes à commander la mise en oeuvre de tout ou partie du procédé lorsqu'elles sont exécutées sur l'ordinateur. Ces moyens de commande et ce programme assurent en particulier le pilotage des actionneurs 80, indépendamment les uns des autres, pour faire varier la profondeur des sillons durant la fabrication de la bande. On peut prévoir notamment que les sillons présentent des profondeur identiques dans une même section de la bande perpendiculaire à sa direction longitudinale ou au contraire des profondeurs différentes. Par exemple, dans au moins une section, la profondeur de l'un des sillons est maximale (par comparaison avec d'autres parties du même sillon) tandis que celle d'un autre sillon est minimale (par comparaison avec d'autres parties de cet autre sillon).

Une autre variante de mise en oeuvre du procédé est illustrée à la figure 22. Elle diffère du mode de mise en oeuvre du procédé associé à la figure 5 par le fait qu'on ne réalise pas sur la bande de relief en saillie de la face 6. Ensuite, pour refermer chaque sillon 44 sur le jonc 8, les roues 70 font fluer la matière de la bande contiguë au sillon et formant notamment une partie supérieure des flancs du sillon. Par conséquent, on referme le sillon sur le jonc avec de la matière de la bande ne formant pas un relief sur la bande.

Les pneumatiques obtenus au moyen de l'invention sont destinés notamment à des roues de véhicules de type léger, camionnette ou poids lourd.

On fait ici observer que l'invention peut être mise en oeuvre de façon simple en adaptant une extrudeuse classique, de type nez plat, ou encore une extrudeuse comportant des canaux de coextrusion, c'est-à-dire en la dotant de moyens pour la réalisation des sillons, de moyens pour l'amenée des joncs et leur insertion dans les sillons et de moyens pour combler les sillons.

On pourra apporter à l'invention de nombreuses modifications sans sortir du cadre de celle-ci.

## Revendications

1. Procédé de réalisation d'une bande de roulement (4) pour un pneumatique (2) de véhicule, **caractérisé en ce que** :
- on extrude une bande de gomme (4) ;
- on forme au moins un sillon (44) dans la bande, la bande présentant de la matière contiguë au sillon ;
- on fournit au moins un jonc (8) à partir d'une bobine ;
- on insère le jonc dans le ou chaque sillon ; et
- on referme le sillon sur le jonc avec la matière de la bande contiguë au sillon.

2. Procédé selon la revendication précédente dans lequel, pour chaque section de la bande, on extrude la section et on forme le sillon (44) dans la section simultanément.

3. Procédé selon au moins l'une quelconque des revendications précédentes dans lequel on forme le sillon (44) ou au moins l'un des sillons de sorte qu'une profondeur (p) du sillon varie le long du sillon.

4. Procédé selon la revendication précédente dans lequel on forme le sillon de sorte que la profondeur (p) du sillon varie le long du sillon de façon sinusoïdale.

5. Procédé selon au moins l'une quelconque des revendications 3 à 4 dans lequel on forme le sillon (44) ou au moins l'un des sillons de sorte que le jonc (8), après l'insertion dans le sillon, affleure à la surface de la bande.

6. Procédé selon au moins l'une quelconque des revendications précédentes dans lequel on forme sur la bande au moins un relief (46) contigu au sillon (44) et de préférence, pour le ou chaque sillon, deux reliefs (46) entre lesquels s'étend le sillon.

7. Procédé selon la revendication précédente dans lequel on referme le sillon (44) sur le jonc (8) avec de la matière formant le ou chaque relief (46).

8. Procédé selon au moins l'une quelconque des revendications précédentes dans lequel on referme le sillon (44) sur le jonc (8) avec de la matière de la bande ne formant pas un relief sur la bande.

9. Machine (10) de réalisation d'une bande de roulement (4) pour un pneumatique (2) de véhicule, **caractérisée** en ce quelle comprend :
- des moyens (26, 18; 126, 18) pour extruder une bande de gomme (4) ;
- des moyens (40; 140) pour former au moins un sillon (44) dans la bande de sorte que la bande présente de la matière contiguë au sillon ;
- des moyens (54) de réception d'une bobine (9) de jonc ;
- des moyens (30) pour insérer dans le ou chaque sillon un jonc (8) provenant de la bobine; et
- des moyens (70) pour refermer le sillon au-dessus du jonc avec de la matière de la bande contiguë au sillon.

10. Machine selon la revendication précédente dans laquelle les moyens (40) de formation du sillon sont montés réglables de façon à modifier une profondeur du sillon (44).

11. Machine selon au moins l'une quelconque des revendications 9 à 10 qui comprend au moins un actionneur (80) apte à déplacer les moyens de formation du sillon durant la formation du sillon ou de l'un au moins des sillons.

12. Machine selon au moins l'une quelconque des revendications 9 à 11, qui comprend un organe (26; 126) formant un orifice d'extrusion et apte à creuser le ou chaque sillon (44).

13. Machine selon la revendication précédente, dans laquelle l'organe (126) est d'une seule pièce.

14. Machine selon au moins l'une quelconque des revendications 12 ou 13 dans laquelle les moyens pour former les sillons (40, 140) sont disposés en partie dans l'orifice d'extrusion.

15. Machine selon au moins l'une quelconque des revendications 9 à 14 dans laquelle les moyens d'insertion (32) comprennent au moins une roue (30).

16. Machine selon au moins l'une quelconque des revendications 9 à 15 qui comprend des moyens (70) pour disposer dans le sillon (44) de la matière formant au moins un relief (46) sur la bande contigu au sillon.

17. Machine selon au moins l'une quelconque des revendications 9 à 16 qui comprend des moyens pour disposer dans le sillon (44) de la matière de la bande ne formant pas un relief sur la bande.

## Patentansprüche

1. Verfahren zur Herstellung eines Laufstreifens (4) für einen Fahrzeugreifen (2), **dadurch gekennzeichnet, dass**:
- ein Gummistreifen (4) extrudiert wird;
- in dem Streifen wenigstens eine Rille (44) geformt wird, wobei der Streifen an die Rille angrenzendes Material aufweist;
- von einer Spule aus wenigstens ein Stab (8) zugeführt wird;
- der Stab in die oder in jede Rille eingesetzt wird; und
- die Rille über dem Stab wieder mit dem an die Rille angrenzenden Material des Streifens verschlossen wird.

2. Verfahren nach dem vorhergehenden Anspruch, wobei, für jeden Abschnitt des Streifens, gleichzeitig der Abschnitt extrudiert wird und die Rille (44) in dem Abschnitt geformt wird.

3. Verfahren nach wenigstens einem der vorhergehenden Ansprüche, wobei die Rille (44) oder wenigstens eine der Rillen derart geformt wird, dass eine Tiefe (p) der Rille entlang der Rille variiert.

4. Verfahren nach dem vorhergehenden Anspruch, wobei die Rille derart geformt wird, dass die Tiefe (p) der Rille entlang der Rille sinusförmig variiert.

5. Verfahren nach wenigstens einem der Ansprüche 3 bis 4, wobei die Rille (44) oder wenigstens eine der Rillen derart geformt wird, dass der Stab (8), nach dem Einsetzen in die Rille, bündig mit der Oberfläche des Streifens abschließt.

6. Verfahren nach wenigstens einem der vorhergehenden Ansprüche, wobei auf dem Streifen wenigstens eine an die Rille (44) angrenzende Erhöhung (46) geformt wird, und vorzugsweise, für die oder für jede Rille, zwei Erhöhungen (46), zwischen denen sich die Rille erstreckt.

7. Verfahren nach dem vorhergehenden Anspruch, wobei die Rille (44) über dem Stab (8) mit Material verschlossen wird, welches die oder jede Erhöhung (46) bildet.

8. Verfahren nach wenigstens einem der vorhergehenden Ansprüche, wobei die Rille (44) über dem Stab (8) mit Material des Streifens verschlossen wird, welches keine Erhöhung auf dem Streifen bildet.

9. Maschine (10) zur Herstellung eines Laufstreifens (4) für einen Fahrzeugreifen (2), **dadurch gekennzeichnet, dass** sie aufweist:
- Mittel (26, 18; 126, 18) zum Extrudieren eines Gummistreifens (4);
- Mittel (40; 140) zum Formen wenigstens einer Rille (44) in dem Streifen, derart, dass der Streifen an die Rille angrenzendes Material aufweist;
- Mittel (54) zur Aufnahme einer Spule (9) mit Stabmaterial;
- Mittel (30) zum Einsetzen eines von der Spule kommenden Stabes (8) in die oder in jede Rille;
- Mittel (70) zum Wiederverschließen der Rille über dem Stab mit Material des Streifens, das an die Rille angrenzt.

10. Maschine nach dem vorhergehenden Anspruch, wobei die Mittel (40) zur Bildung der Rille einstellbar angebracht sind, so dass eine Tiefe der Rille (44) verändert werden kann.

11. Maschine nach wenigstens einem der Ansprüche 9 bis 10, welche wenigstens ein Stellglied (80) aufweist, das geeignet ist, die Mittel zum Formen der Rille während der Bildung der Rille oder der wenigstens einen der Rillen zu verschieben.

12. Maschine nach wenigstens einem der Ansprüche 9 bis 11, welche ein Organ (26; 126) aufweist, das eine Extrusionsöffnung bildet und geeignet ist, die oder jede Rille (44) auszuhöhlen.

13. Maschine nach dem vorhergehenden Anspruch, wobei das Organ (126) aus einem Stück besteht.

14. Maschine nach wenigstens einem der Ansprüche 12 oder 13, wobei die Mittel zum Formen der Rillen (40, 140) teilweise in der Extrusionsöffnung angeordnet sind.

15. Maschine nach wenigstens einem der Ansprüche 9 bis 14, wobei die Mittel zum Einsetzen (32) wenigstens ein Rad (30) aufweisen.

16. Maschine nach wenigstens einem der Ansprüche 9 bis 15, welche Mittel (70) zum Anordnen von Material, welches wenigstens eine an die Rille angrenzende Erhöhung (46) auf dem Streifen bildet, in der Rille (44) aufweist.

17. Maschine nach wenigstens einem der Ansprüche 9 bis 16, welche Mittel zum Anordnen von Material des Streifens, welches keine Erhöhung auf dem Streifen bildet, in der Rille (44) aufweist.

## Claims

1. Process for producing a tread (4) for a vehicle tyre (2), **characterized in that**:
- a tread strip made of rubber (4) is extruded;
- at least one furrow (44) is formed in the tread strip, the tread strip exhibiting material that is contiguous with the furrow;
- at least one string (8) is supplied from a coil;
- the string is inserted into the one furrow or each furrow; and
- the furrow is reclosed over the string using material of the tread strip that is contiguous with the furrow.

2. Process according to the preceding claim, in which, for each section of the tread strip, the section is extruded and the furrow (44) is formed in the section simultaneously.

3. Process according to at least one of the preceding claims, in which the furrow (44) or at least one of the furrows is formed in such a way that a depth (p) of the furrow varies along the furrow.

4. Process according to the preceding claim, in which the furrow is formed in such a way that the depth (p) of the furrow varies along the furrow in a sinusoidal manner.

5. Process according to at least one of Claims 3 to 4, in which the furrow (44) or at least one of the furrows is formed in such a way that the string (8), after its insertion into the furrow, is level with the surface of the tread strip.

6. Process according to at least one of the preceding claims, in which at least one relief (46) that is contiguous with the furrow (44) is formed on the tread strip and, for the one furrow or for each furrow, preferably two reliefs (46) between which the furrow extends.

7. Process according to the preceding claim, in which the furrow (44) is reclosed over the string (8) using material forming the one relief or each relief (46).

8. Process according to at least one of the preceding claims, in which the furrow (44) is reclosed over the string (8) using material of the tread strip which does not form a relief on the tread strip.

9. Machine (10) for producing a tread (4) for a vehicle tyre (2), **characterized in that** it comprises:
- means (26, 18; 126, 18) for extruding a tread strip made of rubber (4);
- means (40; 140) for forming at least one furrow (44) in the tread strip in such a way that the tread strip exhibits material that is contiguous with the furrow;
- means (54) for accommodating a coil (9) of string;
- means (30) for inserting a string (8) originating from the coil into the one furrow or each furrow; and
- means (70) for reclosing the furrow over the string using material of the tread strip that is contiguous with the furrow.

10. Machine according to the preceding claim in which the means (40) for forming the furrow are mounted adjustably in such a way as to modify a depth of the furrow (44).

11. Machine according to at least one of Claims 9 to 10, which comprises at least one actuator (80) adapted to displace the means for forming the furrow during the formation of the furrow or at least one of the furrows.

12. Machine according to at least one of Claims 9 to 11, which comprises a device (26; 126) forming an extrusion orifice and adapted to excavate the one furrow or each furrow (44).

13. Machine according to the preceding claim, in which the device (126) is in a single piece.

14. Machine according to at least one of Claims 12 or 13, in which the means for forming the furrows (40, 140) are arranged in part inside the extrusion orifice.

15. Machine according to at least one of Claims 9 to 14, in which the means of insertion (32) comprise at least one wheel (30).

16. Machine according to at least one of Claims 9 to 15, which comprises means (70) for arranging in the furrow (44) material forming at least one relief (46) on the tread strip that is contiguous with the furrow.

17. Machine according to at least one of Claims 9 to 16, which comprises means for arranging in the furrow (44) material of the tread strip not forming a relief on the tread strip.
